# EUROPÄISCHE PATENTANMELDUNG

(11) **EP 1 278 385 A1**
(43) Veröffentlichungstag der Anmeldung: **22.01.2003**
(21) Anmeldenummer: 02090195.5
(22) Anmeldetag: 30.05.2002
(51) Int. Cl.: H04Q 7/32

(54) **Verfahren zur Voreinstellung eines Mobilfunk-Kommunikations-modus und Fahrzeug-Mobilfunkanordnung**

(30) Priorität: 13.07.2001 DE 10134098
(71) Anmelder: SIEMENS AKTIENGESELLSCHAFT, 80333 München (DE)
(72) Erfinder: Pfoertner, Thomas, 85635 Hoehenkirchen (DE)

(57) **Zusammenfassung**

Verfahren zur Voreinstellung eines Mobilfunk-Kommunikationsmodus in einem Fahrzeug, insbesondere Kraftfahrzeug, unter Nutzung mindestens eines eingebauten Mobilfunk-Endgerätes oder einer Einbauhalterung und eines in diese passenden portablen Mobilfunk-Endgerätes, wobei mindestens eine Kommunikationsfunktion des oder mindestens eines Mobilfunk-Endgerätes durch eine Funktion des Fahrzeuges bzw. eines peripheren Gerätes desselben und/oder mindestens einen separaten Datenträger, insbesondere eine Chipkarte oder Magnetkarte, selbsttätig gesteuert wird derart, daß hiermit verschiedene Kommunikationsprofile eingestellt werden.

## Beschreibung

Die Erfindung betrifft ein Verfahren zur Voreinstellung eines Mobilfunk-Kommunikationsmodus in einem Fahrzeug nach dem Oberbegriff des Anspruchs 1 sowie eine Fahrzeug-Mobilfunkanordnung nach dem Oberbegriff des Anspruchs 10.

Mobilfunk-Endgeräte sind als Kommunikationsinstrumente aus dem täglichen beruflichen und privaten Leben in den Industrieländern ebenso wenig mehr wegzudenken wie der Individualverkehr, insbesondere mit Personenkraftwagen. Das Bestreben, überall und zu jeder Zeit über Telekommunikationsverbindungen erreichbar zu sein, verleitet weite Kreise der Nutzer von Mobiltelefonen dazu, das Mobiltelefon auch im Auto - sogar bei dichtem Verkehr - zu benutzen. Wie in vielen anderen Ländern auch, hat in Deutschland der Gesetzgeber kürzlich der "freihändigen" Nutzung des Mobiltelefons im Auto einen Riegel vorgeschoben, denn diese war zu einer ernstzunehmenden Gefahrenquelle im Straßenverkehr geworden.

Seit einigen Jahren werden einerseits von den Automobilherstellern integrierte Mobilfunk-Endgeräte angeboten, die teilweise mit dem Autoradio und/oder Bordcomputer und/oder einem Navigationssystem zu komplexen Daten- und Kommunikationssystemen verknüpft wurden. Andererseits werden für die Nutzung des auch im Alltag des Benutzers außerhalb des Autos eingesetzten Mobiltelefons Einbauhalterungen angeboten, die die neuerdings vorgeschriebenen Freisprechfunktionen ebenso realisieren wie Stromversorgungs- und Aufladefunktionen und vielfach auch die Anbindung an eine externe Antenne.

Trotz dieser Entwicklungen, die die Nutzung der Möglichkeiten der Mobilfunktechnik im Verkehrsgeschehen wesentlich erleichtern, gibt es noch beträchtliche Unzulänglichkeiten. So ist sowohl die Bedienung eines herkömmlichen Mobiltelefons als auch das Ablesen seiner Anzeige in einer Einbauhalterung sehr erschwert und für Personen mit eingeschränktem Sehvermögen während der Fahrt nahezu unmöglich. Fest eingebaute Mobiltelefone und komplexe Daten-/Telekommunikationssysteme sind zum einen außerordentlich kostspielig, und zum anderen ist ihr Einsatz für den Interessenten vielfach aufgrund mangelnder Anpassung an die speziellen Einsatzbedingungen eines Kraftfahrzeuges sowie unzureichender Möglichkeiten der Koordination mit dem Betrieb des "normalen" Handys nicht hinreichend attraktiv.

Der Erfindung liegt daher die Aufgabe zugrunde, ein verbessertes Verfahren sowie eine verbesserte Fahrzeug-Mobilfunkanordnung der gattungsgemäßen Art anzugeben, welche mit vertretbarem Aufwand dem Benutzer einen deutlich höheren Gebrauchswert erschließen, wobei durch einfache Handhabung insbesondere auch eine Erhöhung der Verkehrssicherheit erreicht werden soll.

Diese Aufgabe wird in ihrem Verfahrensaspekt durch ein Verfahren mit den Merkmalen des Anspruchs 1 und in ihrem Vorrichtungsaspekt durch eine Fahrzeug-Mobilfunkanordnung mit den Merkmalen des Anspruchs 10 gelöst.

Die Erfindung schließt den grundlegenden Gedanken einer Aktivierung angepaßter Mobilfunk-Kommunikationsprofile im Fahrzeug aufgrund der Erfassung bestimmter Fahrzeugfunktionen oder -funktionsparameter sowie - alternativ oder zusätzlich - durch Einsatz eines geeigneten Datenträgers, insbesondere einer Magnetkarte oder Chipkarte, ein. Auf diese Weise wird unabhängig von einer qualifizierten (und mit einigem Aufwand verbundenen) bewußten Einstellung von Kommunikationsbedingungen bzw. -parametern durch den Fahrzeugführer auf einfache Weise eine verkehrsgerechte Realisierungsform der mobilen Kommunikation vorgegeben.

In Abhängigkeit von der im jeweiligen Fahrzeug konkret vorhandenen "Intelligenz" (von herkömmlichen Tür- und Zündschlössern, Tachometern und Drehzahlmessern bis hin zu computerisierten Zugangskontroll- und Funktionsüberwachungssystemen) lassen sich für relativ einfache Einbauhalterungen bis hin zu komplexen, fest eingebauten Kommunikationssystemen verschiedenste Möglichkeiten einer die Handhabung erleichternden und die Verkehrssicherheit erhöhenden Funktionsbeeinflussung von im Fahrzeug eingesetzten Mobilfunk-Endgeräten verwirklichen.

In einer bevorzugten Ausführung, die sich insbesondere für Neufahrzeuge mit Keyless-Go- bzw. Keyless-Entry-Systemen eignet, aber auch in Fahrzeug ohne solche Systeme nachrüstbar ist, werden ein oder mehrere Basis-Kommunikationsprofile durch einen auf einem Datenträger (Magnet- oder Chipkarte) gespeicherten Datensatz vorgegeben. Dieser Datensatz wird durch eine geeignete Leseeinrichtung, die bei Fahrzeugen mit Keyless-Go- bzw. Keyless-Entry-Systemen ohnehin vorhanden ist, vor oder bei Inbetriebnahme des Fahrzeugs gelesen.

Er kann im übrigen auch bei einem SCP des Mobilfunkes gespeichert sein und ist dort dann über einen im Datenträger gespeicherten Identifikator zugreifbar.

Er bewirkt die Einstellung eines sowohl verkehrsgerechten als auch speziellen Nutzerbedürfnissen Rechnung tragenden Kommunikationsprofils. Auf diese Weise ist es z. B. möglich, daß verschiedene Fahrer desselben Fahrzeugs jeweils ihr spezifisches Basis-Kommunikationsprofil - beispielsweise im Hinblick auf Rufumleitungsfunktionen - vorgeben. Dem entsprechend wird die vorgeschlagene Fahrzeug-Mobilfunkanordnung zum Betrieb mit einer von mehreren Magnetkarten oder Chipkarten ausgelegt, die jeweils einem Benutzer des Systems zugeordnet oder für spezielle Anwendungssituationen programmiert sind.

In Abhängigkeit von bestimmten Fahrzuständen bzw. Fahrbetriebsparametern und/oder Betriebszuständen peripherer Geräte (Autoradio, Verkehrsinformations- oder Navigationssystem etc.) werden dann selbsttätig weitere Einstellung oder Modifikationen des Basis-Kommunikationsprofils vorgenommen. Diese Einstellungen bzw. Modifikationen sind dann bevorzugt nutzerunspezifisch und an Grundprinzipien der Bedien- und Verkehrssicherheit orientiert.

Es ist aber auch möglich, bestimmte Basiseinstellungen beispielsweise durch Schaltkontakte einer Einbauhalterung oder durch fest vorprogrammierte Einstellungen eines eingebauten Mobiltelefons zu realisieren. Zusätzliche Bedienschalter ermöglichen auch hier nutzerspezifische Voreinstellungen, die dann wiederum im Ergebnis der Erfassung von Fahrzeugfunktionen bzw. -funktionsparametern modifiziert werden können.

In einer ersten bevorzugten Anwendung der vorgeschlagenen Lösung schließt ein einstellbares Kommunikationsprofil einen Sprachsteuerungsmodus und/oder einen Textnachrichten-Sprachausgabemodus ein. Dieser kann bereits auf dem Datenträger vorprogrammiert sein oder in Abhängigkeit von einer Fahrzeugfunktion bzw. einem Fahrzustand temporär eingestellt werden. So ist es beispielsweise möglich, unter Nutzung eines im Fahrzeug fest eingebauten Spracherkenners bzw. -synthesizers (der beispielsweise zu einem Bordcomputersystem gehört) ein fest eingebautes oder in die Einbauhalterung eingestecktes Handy mit einer fortgeschrittenen, komfortablen Sprachsteuerung zu bedienen, ohne für diffizile Tasteneingaben die Hände vom Lenkrad nehmen zu müssen und die Konzentration auf das Verkehrsgeschehen zu verlieren. Andererseits können vom Mobiltelefon empfangene Textnachrichten (SMS oder per WAP übermittelte Nachrichten) als Sprachnachricht ausgegeben werden. Das erspart es dem Nutzer, auf dem kleinen und schlecht lesbaren Handydisplay die Nachricht entziffern zu müssen. (Spracherkenner und/oder Synthesizer können auch im IP des Mobilfunknetzes implementiert sein.)
In einer weiteren sinnvollen Ausführung wird in einem einstellbaren Kommunikationsprofil eine konkrete Rufumleitungsfunktion realisiert - insbesondere bei hoher Fahrzeuggeschwindigkeit und/oder Innenlautstärke oder während einer Sprachausgabe eines Verkehrsinformationssystems oder Navigationssystems. In solchen Phasen eingehende Rufe werden insbesondere auf eine Voice-Mail-Box umgeleitet. Die Rufumleitung kann insbesondere differenziert aufgrund einer sogenannten Black-White-List von vorbestimmten Rufnummern realisiert werden, die ggfs. im SCP des Mobilfunknetzes gespeichert ist. Dort können auch sonstige Daten zur Realisierung der Kommunikationsprofile gespeichert sein.

In einer grundlegenden Ausgestaltung der vorgeschlagenen LÖsung schließt eines der einstellbaren Kommunikationsprofile bereits die selbsttätige Aktivierung eines eingebauten Mobilfunk-Endgerätes ein - insbesondere beim Besteigen oder Starten des Fahrzeugs bzw. beim Lesen des Datenträgers. Bei Fahrzeugen mit Keyless-Entry- bzw. Keyless-Go-Ausstattung fallen diese Vorgänge zusammen, sofern - was hier natürlich zweckmäßig ist - die Chipkarte mit den Berechtigungsdaten zur Fahrzeugbenutzung zugleich den Datenträger zur Einstellung des Kommunikationsprofils oder für einen Identifikator zu dessen Abruf aus dem Netz darstellt.

Bevorzugt geht die Aktivierung des eingebauten Mobilfunk-Endgerätes mit einer selbsttätigen Deaktivierung von gegebenenfalls im Fahrzeug befindlichen weiteren (portablen) Handys einher. Damit wird ausgeschlossen, daß während des Fahrens Störungen oder Ablenkungen von diesen ausgehen können. Weiter bevorzugt ist in diesem Zusammenhang die Etablierung einer Rufumleitung auf das eingebaute Mobilfunk-Endgerät, die insbesondere bereits auf dem Datenträger oder auch im eingebauten Mobiltelefon selbst programmiert oder im Mobilfunknetz hinterlegt sein kann.

Es versteht sich, daß zu den oben erwähnten Verfahrensaspekten auch Vorrichtungsaspekte einer im Fahrzeug betriebenen Mobilfunkanordnung korrespondieren und der Fachmann solche Vorrichtungsaspekte ohne weiteres aus den genannten Verfahrensaspekten ableiten kann. Es wird daher hier - soweit nicht oben auch Vorrichtungsaspekte bereits genannt wurden - nur auf einige wesentliche Komponenten eines solchen Systems hingewiesen:

Als zentrale Komponenten des vorgeschlagenen Systems sind eine Datenträger-Leseeinrichtung und/oder ein Funktionsfühler zur Erfassung einer Fahrzeugfunktion bzw. einer Gerätefunktion eines peripheren Gerätes im Fahrzeug anzusehen. Mit dieser Leseeinrichtung bzw. dem Funktionsfühler ist eine Kommunikationsmodus-Steuereinheit zur Steuerung der erwähnten Kommunikationsmodi verbunden. Diese kann wiederum mit einem eingebauten Spracherkenner und/oder Sprachsynthesizer und/oder einer Rufumleitungs-Steuereinheit verbunden sein. Weiter kann sie als Schalteinheit zur Entsperrung bzw. Aktivierung eines eingebauten Mobilfunk-Endgerätes, insbesondere mit gleichzeitiger Sperrung bzw. Deaktivierung eines im Fahrzeug befindlichen herkömmlichen Mobiltelefons, ausgebildet sein.

Vorteile und Zweckmäßigkeiten der Erfindung ergeben sich im übrigen aus den Unteransprüchen sowie der nachfolgenden Beschreibung von Ausführungsbeispielen und -aspekten der Erfindung anhand der Figuren. Von diesen zeigen:
Fig. 1 eine Prinzipskizze zur Erläuterung der Erfindung und
Fig. 2 ein Funktions-Blockschaltbild einer Fahrzeug-Mobilfunkanordnung gemäß einer bevorzugten Ausführungsform der Erfindung.

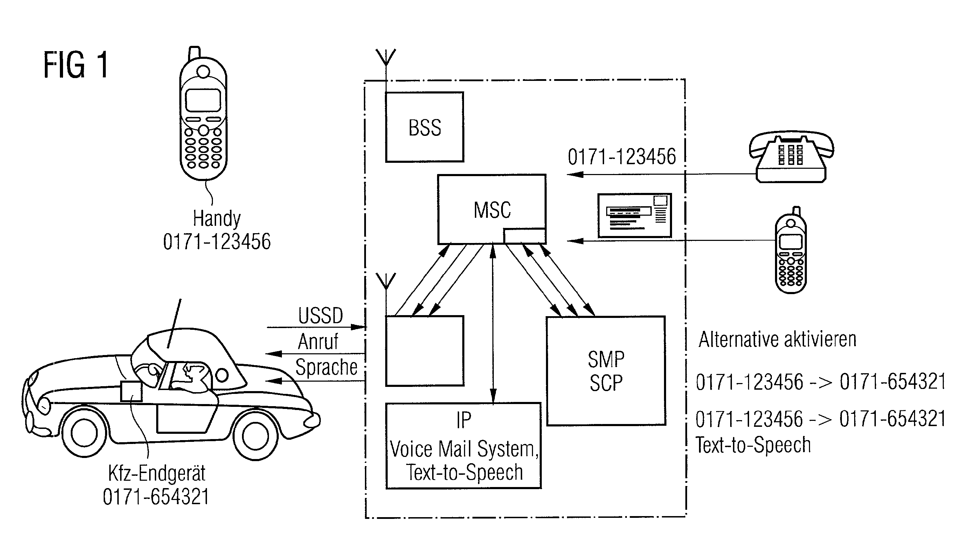

Fig. 1 ist aufgrund der "sprechenden" Beschriftung im wesentlichen selbsterklärend. Es ist zu erkennen, daß der Fahrer des dargestellten Cabrios alternativ ein herkömmliches (portables) Handy mit der Rufnummer 0171-123456 und ein eingebautes Kfz-Endgerät mit der Rufnummer 0171-654321 benutzt. Im rechten oberen Teil der Figur ist dargestellt, daß normale Anrufe (Sprachnachrichten) und Textnachrichten unter der Rufnummer 0171-123456 des herkömmlichen Handys eingehen können, während der Benutzer im Cabrio sitzt.

Dieser hat jedoch (beispielsweise durch Einlegen der weiter oben erwähnten Magnet- oder Chipkarte) sein Kfz-Endgerät mit der Nummer 0171-654321 aktiviert und zugleich das Handy deaktiviert, was per USSD dem Mobilfunkbetreiber signalisiert wurde. Die entsprechende Nachricht wurde über die aktuell in Anspruch genommene Basisstation BSS und die Mobilvermittlungsstelle MSC zum Dienstverwaltungs-/Dienststeuerknoten SMP SCP übermittelt, wo die Rufumleitung vom Handy auf das Kfz-Endgerät registriert und realisiert wird und die erforderlichen Daten gespeichert sind.

Durch den Pfeil "Sprache" auf der linken Seite der Figur und den Hinweis "Text-to-Spech" rechts unten wird symbolisiert, daß zugleich Textnachrichten (beispielsweise SMS) in Sprachnachrichten gewandelt und dem Benutzer über die Freisprecheinrichtung seines Kfz-Endgerätes als solche dargeboten werden. Eine intelligente Peripherie IP realisiert sowohl diese Funktion als auch eine Rufumleitung auf eine Voice-Mail-Box bei Vorliegen spezieller Fahrzustände, in denen der Fahrer gemäß dem eingestellten Kommunikationsprofil überhaupt keinen Anruf erhalten will.

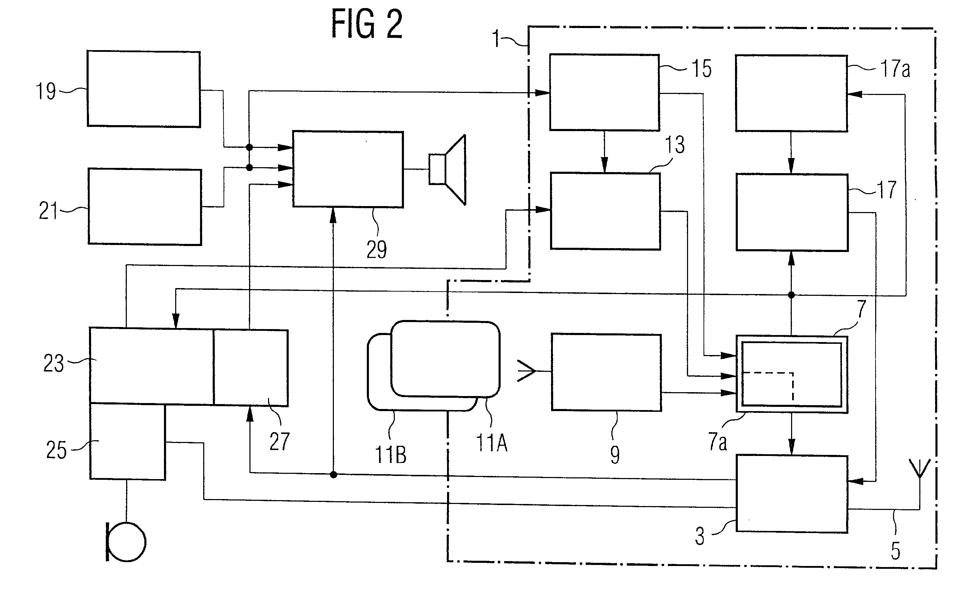

In Fig. 2 ist grob schematisch (und unter Vernachlässigung der realen Funktionsaufteilung zwischen fahrzeug- bzw. endgerätinternen Einheiten und externen Systemkomponenten des Mobilfunksystems) die im Zusammenhang mit der Ausführung der Erfindung wesentlichen Funktionskomponenten einer Fahrzeug-Mobilfunkanordnung 1 dargestellt.

Kernstück der Fahrzeug-Mobilfunkanordnung 1 ist natürlich ein fest eingebautes Mobilfunk-Endgerät 3, das an eine Fahrzeug-Mobilfunkantenne 5 und die (nicht dargestellte) Bordstromversorgung fest angeschlossen ist. Dem eingebauten Mobilfunk-Endgerät 3 ist eine Kommunikationsmodus-Steuereinheit 7 zugeordnet, deren Aufbau im wesentlichen dem eines Kleinrechners entspricht und die u. a. einen Arbeitsspeicher 7a hat, in dem jeweils ein aktives Kommunikationsprofil gespeichert ist.

Die Kommunikationsmodus-Steuereinheit 7 ist eingangsseitig mit einem berührungslos arbeitenden Kartenleser 9 zum Lesen von Chipkarten 11A, 11B - die zugleich Bestandteil eines Keyless-Entry-/Keyless-Go-Systems sind - sowie einer Fahrzeugfunktions-Erfassungseinheit 13 und einer Verkehrsinfo-Erfassungseinheit 15 verbunden. Ausgangsseitig ist die Kommunikationsmodus-Steuereinheit 7 neben dem Endgerät 3 mit einer Rufumleitungs-Steuereinheit 17 verbunden, der ein Rufumleitungs-Listenspeicher 17a zugeordnet ist. Letzterer ist im übrigen auch eingangsseitig mit der Kommunikationsmodus-Steuereinheit 7 zur nutzerspezifischen Einstellung von Black/White-Listen für die Rufumleitung verbunden.

Die Fahrzeug-Mobilfunkanordnung 1 wirkt zusammen mit einem Navigationssystem 19, einem Autoradio 21 mit Verkehrsfunkdecoder sowie einem Bordcomputer 23, dem ein Spracherkenner 25 und eine Sprachsynthesestufe 27 zugeordnet sind. Das Navigationssystem 19, das Autoradio 21 und die Sprachsynthesestufe 27 sind mit Eingängen einer Audioeinheit 29 verbunden. Wie in der Figur zu erkennen ist, ist das Mobilfunk-Endgerät 3 eingangsseitig (wahlweise) mit dem Spracherkenner 25 und ausgangsseitig sowohl direkt mit der Audiostufe 29 als auch mit der Sprachsynthesestufe 27 verbunden.

Die Funktion dieser Anordnung ergibt sich weitgehend aus den obigen Ausführungen und soll daher hier nur noch kurz skizziert werden: Je nach konkreter Ausführung des Fahrzeugszugangs- und -inbetriebnahmesystems wird bereits beim Öffnen der Autotüren oder bei Inbetriebnahme des Fahrzeugs über den Kartenleser 9 die Chipkarte 11A oder 11B gelesen und entsprechend den dort programmierten Daten ein Mobilfunk-Kommunikationsprofil in den Arbeitsspeicher 7a der Kommunikationsmodus-Steuereinheit 7 gelesen. Diese aktiviert das eingebaute Mobilfunk-Endgerät 3 und bewirkt durch Aussendung einer entsprechenden Nachricht über dieses an den Mobilfunkbetreiber eine Deaktivierung eines u. U. im Auto befindlichen weiteren Handys.

In Abhängigkeit von dem gespeicherten Kommunikationsprofil wird entweder durchgängig oder temporär in bestimmten Betriebszuständen des Navigationssystems 19 oder Autoradios 21 oder bei Anliegen bestimmter Ausgangssignale des Bordcomputers 23 ein Sprachsteuermodus über den Spracherkenner 25 und die Sprachausgabe eingehender Textnachrichten über die Sprachsynthesestufe 27 aktiviert. Weiterhin wird in Abhängigkeit vom Vorliegen von Audiosignalen des Navigationssystems 19 oder des Verkehrsfunkdecoders im Autoradion 21 am Eingang der Audioeinheit 29 die Rufumleitungs-Steuereinheit 17 zur Umleitung von zu entsprechenden Zeitpunkten beim Mobilfunk-Endgerät 3 eingehenden Rufen von weniger wichtigen Rufnummern aktiviert. Anrufe von priorisierten Rufnummern werden hingegen dem Fahrer akustisch und/oder optisch angezeigt, so daß er gegebenenfalls die laufende Ansage des Navigationssystems 19 oder Verkehrsfunkdurchsage des Autoradios 21 unterbrechen und den Anruf annehmen kann.

Die Ausführung der Erfindung ist nicht auf die oben skizzierte allgemeine Konfiguration und das vorstehend beschriebene konkrete Ausführungsbeispiel beschränkt, sondern ebenso in einer Vielzahl von Abwandlungen möglich, die im Rahmen fachgemäßen Handelns liegen.

## Patentansprüche

1. Verfahren zur Voreinstellung eines Mobilfunk-Kommunikationsmodus in einem Fahrzeug, insbesondere Kraftfahrzeug, unter Nutzung mindestens eines eingebauten Mobilfunk-Endgerätes oder einer Einbauhalterung und eines in diese passenden portablen Mobilfunk-Endgerätes,
**dadurch gekennzeichnet, daß**
mindestens eine Kommunikationsfunktion des oder mindestens eines Mobilfunk-Endgerätes durch eine Funktion des Fahrzeuges bzw. eines peripheren Gerätes desselben und/oder mindestens einen separaten Datenträger, insbesondere eine Chipkarte oder Magnetkarte, selbsttätig gesteuert wird derart, daß hiermit verschiedene Kommunikationsprofile eingestellt werden.

2. Verfahren nach Anspruch 1,
**dadurch gekennzeichnet, daß**
mindestens ein auf dem Datenträger gespeichertes und/oder mindestens teilweise in einen Dienststeuerknoten eines Mobilfunknetzes implementiertes Basis-Kommunikationsprofil mit mindestens einer, insbesondere für den Fahrzeugeinsatz ausgewählten, Grundeinstellung des Mobilfunk-Endgerätes im Ansprechen auf eine Erfassung von Fahrzeugfunktionen oder -funktionsparametern temporär modifiziert wird.

3. Verfahren nach Anspruch 1 oder 2,
**dadurch gekennzeichnet, daß**
ein einstellbares Kommunikationsprofil einen Sprachsteuerungsmodus und/oder Textnachrichten-Sprachausgabemodus einschließt.

4. Verfahren nach Anspruch 3,
**dadurch gekennzeichnet, daß**
der Sprachsteuerungs- bzw. Sprachausgabemodus unter Zugriff auf einen im Fahrzeug eingebauten oder in einer inteligenten Peripherie eines Mobilfunknetazes implementierten Spracherkenner bzw. -synthesizer ausgeführt wird.

5. Verfahren nach einem der vorangehenden Ansprüche,
**dadurch gekennzeichnet, daß**
ein einstellbares Kommunikationsprofil eine, insbesondere in Abhängigkeit von der Fahrzeuggeschwindigkeit und/oder Innenlautstärke und/oder Anrufer-Rufnummer und/oder einer Funktion eines Verkehrsinformationssystems oder Navigationssystems, steuerbare Rufumleitungsfunktion einschließt.

6. Verfahren nach Anspruch 5,
**dadurch gekennzeichnet, daß**
die Rufumleitungsfunktion eine Rufumleitung auf eine Voice-Mail-Box einschließt.

7. Verfahren nach einem der vorangehenden Ansprüche,
**dadurch gekennzeichnet, daß**
ein einstellbares Kommunikationsprofil die selbsttätige Aktivierung eines eingebauten Mobilfunk-Endgerätes, insbesondere beim Besteigen oder Starten des Fahrzeugs oder beim Lesen des Datenträgers, einschließt.

8. Verfahren nach Anspruch 7,
**dadurch gekennzeichnet, daß**
die Aktivierung des eingebauten Mobilfunk-Endgerätes mit einer selbsttätigen Deaktivierung eines im Fahrzeug befindlichen portablen Mobilfunk-Endgerätes, insbesondere mit automatischer Rufumleitung auf das eingebaute Mobilfunk-Endgerät, verbunden ist.

9. Verfahren nach einem der vorangehenden Ansprüche,
**dadurch gekennzeichnet, daß**
als Datenträger eine, insbesondere berührungslos lesbare, Chipkarte zur Steuerung der Fahrzeugfunktionen verwendet wird.

10. Fahrzeug-Mobilfunkanordnung mit einem in ein Fahrzeug, insbesondere Kraftfahrzeug, eingebauten Mobilfunk-Endgerät oder einer Einbauhalterung zur Aufnahme eines portablen Mobilfunk-Endgerätes,
**gekennzeichnet durch**
eine dem eingebauten Mobilfunk-Endgerät und/oder der Einbauhalterung zugeordnete Kartenleseeinrichtung zum Lesen eines Datenträgers, insbesondere einer Magnetkarte oder Chipkarte, und/oder
einen Funktionsfühler zur Erfassung einer Fahrzeugfunktion bzw. einer Gerätefunktion eines peripheren Gerätes und
eine mit der Kartenleseeinrichtung und/oder dem Funktionsfühler eingangsseitig verbundene Kommunikationsmodus-Steuereinheit zur Steuerung mindestens einer Kommunikationsfunktion des oder mindestens eines Mobilfunk-Endgerätes in Abhängigkeit vom Informationsgehalt des Datenträgers und/oder einem Erfassungsergebnis des Funktionsfühlers.

11. Fahrzeug-Mobilfunkanordnung nach Anspruch 10,
**gekennzeichnet durch**
einen eingebauten Spracherkenner und/oder Sprachsynthesizer oder eine Schnittstelle zu einem in einem Mobilfunknetz implementierten Spracherkenner bzw. synthesizer, der die über einen Steuereingang mit der Kommunikationsmodus-Steuereinheit verbunden ist.

12. Fahrzeug-Mobilfunkanordnung nach Anspruch 10 oder 11,
**gekennzeichnet durch**
eine Rufumleitungs-Steuereinheit, die über einen Steuereingang mit der Kommunikationsmodus-Steuereinheit zur automatischen Aktivierung/Deaktivierung einer Rufumleitung verbunden ist.

13. Fahrzeug-Mobilfunkanordnung nach Anspruch 12,
**dadurch gekennzeichnet, daß**
die Rufumleitungs-Steuereinheit einen Rufnummern-Listenspeicher zur Speicherung einer Black-White-List von Rufnummern aufweist, für die eine bedingte Rufumleitung gültig ist, oder eine Schnittstelle zu einem in einem Dienststeuerknoten eines Mobilfunknetzes realisierten Rufnummernlistenspeicher, aufweist

14. Fahrzeug-Mobilfunkanordnung nach einem der Ansprüche 10 bis 13,
**dadurch gekennzeichnet, daß**
die Kommunikationsmodus-Steuereinheit im Ansprechen auf das Lesen eines zur Steuerung berechtigenden Datenträgers, insbesondere einer Chipkarte eines Keyless-Go- bzw. Keyless-Entry-Systems, eine Aktivierung des eingebauten Mobilfunk-Endgerätes und insbesondere gleichzeitig eine Deaktivierung eines im Fahrzeug befindlichen portablen Mobilfunk-Endgerätes steuert.

15. Fahrzeug-Mobilfunkanordnung nach Anspruch 14,
**dadurch gekennzeichnet, daß**
die Kommunikationsmodus-Steuereinheit zur automatischen Einstellung einer Rufumleitung von dem portablen Mobilfunk-Endgerät auf das eingebaute Mobilfunk-Endgerät ausgebildet ist.

16. Fahrzeug-Mobilfunkanordnung einem der Ansprüche 10 bis 15,
**dadurch gekennzeichnet, daß**
der Funktionsfühler mit einem Tachometer und/oder Drehzahlmesser des Fahrzeuges und/oder einem Audioausgang eines Verkehrsinformationssystems oder Navigationssystems oder einem Signalausgang eines Bordcomputers verbunden ist.

17. Fahrzeug-Mobilfunkanordnung nach einem der Ansprüche 10 bis 16,
**dadurch gekennzeichnet, daß**
als Kartenleseeinrichtung die Leseeinrichtung eines Zugangs- bzw. Inbetriebnahme-Steuerungssystems des Fahrzeugs genutzt wird.

18. Fahrzeug-Mobilfunkanordnung nach einem der Ansprüche 10 bis 17,
**gekennzeichnet durch**
eine Mehrzahl von austauschbaren Datenträgern, insbesondere Magnetkarten oder Chipkarten, zur Speicherung spezifischer Basis-Kommunikationsprofile verschiedener Nutzer bzw. für verschiedene Anwendungssituationen.
